## Europäisches Patentamt
## European Patent Office
## Office européen des brevets

(11) Veröffentlichungsnummer: **0 185 114**
**B1**

(12) # EUROPÄISCHE PATENTSCHRIFT

(45) Veröffentlichungstag der Patentschrift:
23.09.87

(51) Int. Cl.⁴: **B 65 G 47/82,** B 65 G 47/71

(21) Anmeldenummer: **84116053.4**

(22) Anmeldetag: **21.12.84**

(54) Verfahren und Vorrichtung zum Fördern von Gegenständen.

(43) Veröffentlichungstag der Anmeldung:
25.06.86 Patentblatt 86/26

(73) Patentinhaber: **Truninger, Paul, Industriestrasse 9, CH- 4513 Langendorf/Solothurn (CH)**

(45) Bekanntmachung des Hinweises auf die Patenterteilung:
23.09.87 Patentblatt 87/39

(72) Erfinder: **Truninger, Paul, Industriestrasse 9, CH-4513 Langendorf/Solothurn (CH)**

(84) Benannte Vertragsstaaten:
**AT BE CH DE FR GB IT LI LU NL SE**

(74) Vertreter: **Haug, Dietmar, Patentanwälte Andrae, Flach, Haug, Kneissl Steinstrasse 44, D-8000 München 80 (DE)**

(56) Entgegenhaltungen:
**EP-A-0 132 635**
**DE-B-1 159 328**

## Beschreibung

Die Erfindung betrifft eine Vorrichtung zum Fördern von Gegenständen von einem Magazin zu mehreren Ablageflächen mit einem Förderorgan zum Transportieren der Gegenstände von dem Magazin zu einer der Zahl der Ablageflächen entsprechenden Anzahl von Abhebepositionen auf dem Förderorgan, die im Abstand voneinander unter den Ablageflächen angeordnet sind, und mit einer der Zahl der Abhebepositionen entsprechenden Anzahl von Hebevorrichtungen zum Transportieren der Gegenstände von den Abhebepositionen zu den Ablageflächen. Die Erfindung betrifft auch ein Verfahren zum Fördern von Gegenständen auf einem Förderorgan von einer Aufgabeposition zu mehreren, in Förderrichtung V aufeinanderfolgenden Abhebepositionen, die im Abstand voneinander angeordnet sind.

In der EP-A-0 132 635, die zum Stand der Technik gemäß Artikel 54(3) gehört, ist eine Verladeeinrichtung für längliche Werkstücke beschrieben, welche lagenweise unter Verwendung von Zwischenlagen die Werkstücke zu einem Behältnis transportiert und dort aufstapelt. Die dort verwendeten Zwischenlagen werden aus einem neben jedem Transportarm der Transportvorrichtung angeordneten Magazin auf die Transportarme geschoben.

Die gezeigte Anordnung dieser Zwischenlagenmagazine hat den Nachteil, daß sie nur nachgeladen werden können, wenn das Behältnis aus der Verladeeinrichtung herausgenommen worden ist. Zum Nachladen dieser Zwischenlagenmagazine muß also das Behältnis zuerst weggefahren werden, dann müssen die einzelnen Magazine von Hand nachgefüllt und muß schließlich das Behältnis wieder in die Verladeeinrichtung eingefahren werden. Hierzu ist nicht nur ein großer Arbeitsaufwand des Personals erforderlich, sondern es besteht auch der Nachteil, daß während dieser Zeit die Verladeeinrichtung nicht arbeiten kann, wodurch unter Umständen vorgelagerte Produktionsstufen stillgelegt werden müssen.

Eine Vorrichtung und ein Verfahren zum Fördern von Gegenständen gemäß dem Oberbegriff des Patentanspruches 1 bzw. 12 sind aus der DE-B-1 159 328 bekannt. Hierbei werden als Förderorgan ein horizontal hin- und herbewegbarer Einschubstößel und eine Gleitfläche verwendet, auf der einer der beiden jeweils paarweise zu fördernden Gegenstände durch den Einschubstößel zu seiner Abhebeposition hin bewegt wird. Der andere Gegenstand wird auf dem Einschubstößel angeordnet, der ihn zu seiner Abhebeposition hin trägt. Der Einschubstößel führt immer nur einen einzigen Förderhub durch, um zumindest den auf ihm liegenden Gegenstand in einem Zug zu seiner Abhebeposition zu bringen. Beim gleichen Hub des Einschubstößels wird der auf der Gleitfläche verschiebbare Gegenstand entweder ebenfalls in einem Zug zu seiner Abhebeposition gebracht, oder es wird ein zuvor auf die Gleitfläche eingespeister Gegenstand mit Hilfe des neu eingespeisten Gegenstandes und eines weiteren, ebenfalls zuvor eingespeisten Gegenstandes an die entsprechende Abhebeposition geschoben.

Die Aufgabe der Erfindung besteht darin, die Vorrichtung und das Verfahren gemäß dem Oberbegriff des Patentanspruches 1 bzw. 12 so fortzubilden, daß der Förderbetrieb auch während des Nachladens des Magazins ohne Unterbrechung weitergeführt werden kann, wobei eine rasche Zufuhr der Gegenstände zu den Abhebepositionen oder Ablageflächen unter Vermeidung hoher Beschleunigungen und unter Einhaltung einer hohen Positioniergenauigkeit ermöglicht wird.

Diese Aufgabe wird einerseits durch eine Vorrichtung gemäß dem Oberbegriff des Patentanspruches 1 gelöst, die dadurch gekennzeichnet ist, daß das Förderorgan ein umlaufendes endloses Förderorgan ist, das schrittweise mit einer Schrittlänge $s = \frac{b}{n-1}$ bewegbar ist, wobei b der Abstand zwischen je zwei benachbarten Abhebepositionen und n die Anzahl der Abhebepositionen ist, und daß das Magazin von der in Förderrichtung V am nächsten liegenden Abhebeposition einen Abstand $a = s \cdot x$ hat, wobei x eine ganze Zahl ist.

Andererseits wird diese Aufgabe durch ein Verfahren gemäß dem Oberbegriff des Patentanspruches 12 gelöst, das dadurch gekennzeichnet ist, daß als Förderorgan ein umlaufendes endloses Förderorgan verwendet wird, das mit den darauf angeordneten Gegenständen schrittweise bewegt wird, daß zwischen zwei aufeinanderfolgenden Schritten jeweils ein Gegenstand an der Aufgabeposition auf dem Förderorgan angeordnet wird, daß zwischen zwei Folgen von n Schritten wenigstens ein Gegenstand von seiner Abhebeposition entfernt wird, daß die Schrittlänge s nach der Formel $s = \frac{b}{n-1}$ errechnet wird, wobei b der Abstand zwischen je zwei benachbarten Abhebepositionen und n die Anzahl der Schritte ist, die gleich der Anzahl der Abhebepositionen ist, und daß die Aufgabeposition von der in Förderrichtung V am nächsten liegenden Abhebeposition um einen Abstand $a = s \cdot x$ entfernt ist, wobei x eine ganze Zahl ist.

Die Vorrichtung und das Verfahren nach der Erfindung haben Vorteil, daß sie in ihrer Anwendung nicht auf die Zufuhr von Zwischenlagen auf die Transportarme einer Transportvorrichtung für längliche Werkstücke beschränkt sind, sondern beim Transport jeglicher Art von Gegenständen einsetzbar sind, wobei sie sich in allen Fällen durch eine sehr hohe Positioniergenauigkeit bei einer wenig aufwendigen Steuerung und durch eine große Betriebssicherheit auszeichnen.

Weitere Vorteile des erfindungsgemäßen Verfahrens und der erfindungsgemäßen Vorrichtung ergeben sich aus der nachfolgenden, zur Erläuterung der Erfindung dienenden Beschreibung eines Ausführungsbeispiels in Verbindung mit den Zeichnungen. Es zeigt:

Fig. 1 vier schematische Darstellungen einer Vorrichtung nach der Erfindung in vier aufeinanderfolgenden Zeitpunkten des erfindungsgemäßen Verfahrens, in denen entsprechend der Reihenfolge der Darstellungen von oben nach unten zum ersten, zweiten, dritten und vierten Mal in dem Verfahren Gegenstände in Form von Zwischenlagen von den Abhebepositionen auf dem Förderorgan zu den Ablageflächen transportiert werden,

Fig. 2 eine schematische Seitenansicht der Magazine und eines Teiles des unter ihnen vorbeilaufenden Förderorgans der Vorrichtung nach Fig. 1 in vergrößerter Darstellung und

Fig. 3 einen schematischen Schnitt durch ein in Fig. 2 dargestelltes Magazin und das unter ihm geführte Förderorgan, wobei der Schnitt quer zu der in Fig. 2 angegebenen Förderrichtung V gelegt ist.

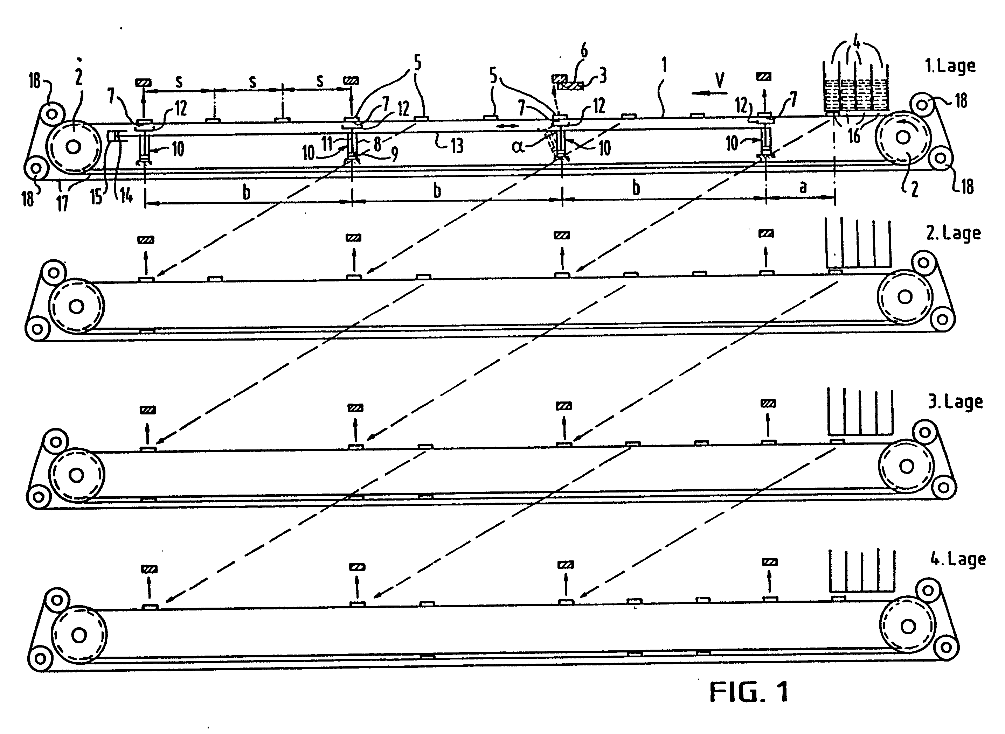

Wie inbesondere aus Fig. 1 ersichtlich ist, weist eine Fördervorrichtung nach der Erfindung ein umlaufendes, endloses Förderorgan 1 beispielsweise in Form einer Förderkette oder eines Förderbandes auf, das über zwei Umlenkrollen 2 geführt ist und von einem nicht dargestellten Schrittmotor derart antreibbar ist, daß es sich in Betrieb in Richtung des Pfeiles V schrittweise bewegt. Das Förderorgan 1 ist in bezug auf die Transportarme 3 einer nicht näher dargestellten Transportvorrichtung für längliche Werkstücke so angeordnet, daß sich ein Teil des Förderorgans 1 unter den Transportarmen 3 befindet und ein anderer Teil, und zwar der in Fig. 1 rechte Teil, seitlich neben den Transportarmen 3 angeordnet ist, wobei das Förderorgan 1 im wesentlichen quer zu den Transportarmen 3 ausgerichtet ist. Über dem seitlich neben den Transportarmen 3 liegenden Teil des Förderorgans 1 sind mehrere, in Förderrichtung V aufeinanderfolgende Magazine 4 für Zwischenlagen 5 angeordnet, die auf die Ablageflächen 6 bildenden Oberseiten der Transportarme 3 auf eine weiter unten näher beschriebene Art und Weise gefördert werden. Unter jedem Transportarm 3 ist eine Abhebeposition 7 auf dem Förderorgan 1 vorgesehen, und unter jeder Abhebeposition 7 ist ein Zylinder 8 mit einem darin hin- und herbewegbaren, mit Druckmittel beaufschlagbaren, Kolben 9 einer Hebevorrichtung 10 angeordnet.

An dem Kolben 9 jeder Hebevorrichtung 10 ist über eine Kolbenstange 11 eine Mitnehmereinrichtung 12 befestigt, die am oberen Ende der Kolbenstange 11 angeordnet ist. Die Hebevorrichtungen 10 sind um einen am unteren Ende der Zylinder 8 angeordneten Drehpunkt kippbar gelagert. Eine horizontale Stange 13 verbindet die oberen Enden der Zylinder 15 sämtlicher Hebevorrichtungen 10 miteinander und ist an ihrem einen Ende mit einem mit Druckmittel beaufschlagbaren Kolben 14 verbunden, der in einem Zylinder 15 hin- und herbewegbar ist.

Wenn die Hebevorrichtungen 10 in ihrer vertikalen Stellung sind, wie in Fig. 1 gezeigt ist, fällt die Achse der Zylinder 8 mit einer durch die Mitnehmereinrichtungen 12, die Abhebepositionen 7 und die Ablageflächen 6 der Transportarme 3 gehenden vertikalen Linie zusammen. Die Mitnehmereinrichtungen 12 sind zwischen einer unter den Abhebepositionen 7 liegenden Stellung, die in Fig. 1 gezeigt ist, und einer über den Ablageflächen 6 der Transportarme 3 liegenden Stellung auf einem an den Transportarmen 3 seitlich vorbeiführenden Weg hin- und herbewegbar, wobei die Hin- und Herbewegung der Mitnehmereinrichtungen 12 durch die Bewegung der Kolben 9 in den Zylindern 8 bewirkt wird. Die Hebevorrichtungen 10 sind gegenüber der Vertikalen um einen Winkel $\alpha$ kippbar, um die Mitnehmereinrichtungen seitlich an den Transportarmen 3: vorbeibewegen zu können, wobei die Kippbewegung der Hebevorrichtungen 10 durch die Bewegung des Kolbens 14 in dem Zylinder 15 bewirkt wird.

Wie aus Fig. 1 in Verbindung mit den vorstehenden Ausführungen deutlich wird, werden die an den Abhebepositionen 7 liegenden Zwischenlagen 5 von den Mitnehmereinrichtungen 12 beim Hochfahren der Mitnehmereinrichtungen 12 mitgenommen, aufgrund der Kippbewegung der Hebevorrichtungen 10 seitlich an den Transportarmen 3 vorbeigeführt und beim Zurückfahren der Mitnehmereinrichtungen 12 auf den Ablageflächen 6 der Transportarme 3 selbsttätig abgelegt.

Das Förderorgan 1 ist mit aneinandergereihten Öffnungen versehen, durch welche die Mitnehmereinrichtungen 12 hindurchbewegbar sind.

Nach einem Merkmal der Erfindung entspricht die Anzahl n der Abhebepositionen 7 auf dem Förderorgan 1 der Anzahl der Ablageflächen 6 oder der Transportarme 3 und der Anzahl der Hebevorrichtungen 10 und haben die durch die Ablageflächen 6, die Abhebepositionen 7 und die Hebevorrichtungen 10 gehenden vertikalen Linien und damit die Abhebepositionen 7 den gleichen Abstand b voneinander. Im dargestellten Beispiel sind jeweils vier Abhebepositionen 7 vier Ablageflächen 6 und vier Hebevorrichtungen 10 vorgesehen.

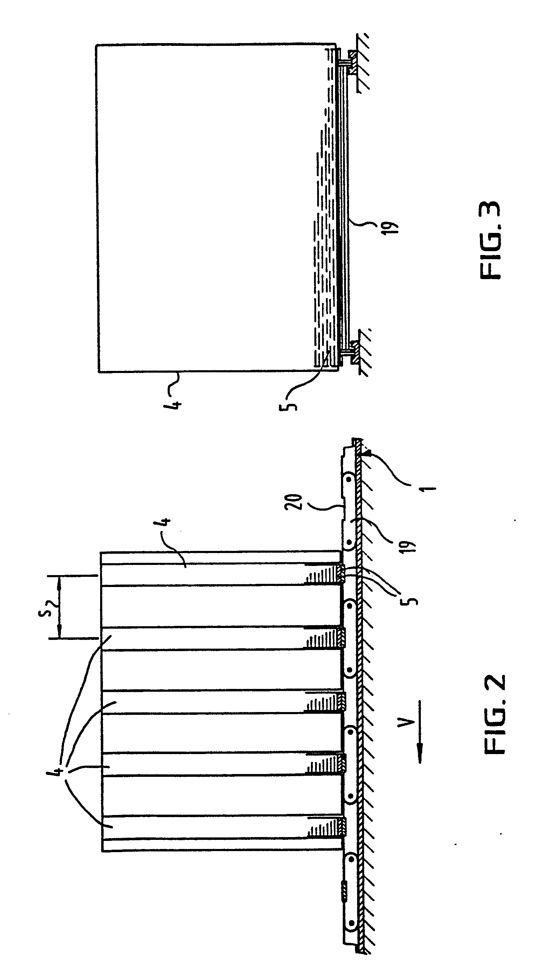

Die Magazine 4 für die Zwischenlagen 5 weisen vertikal angeordnete Kästen auf, in denen die Zwischenlagen 5, die aus Pappe, Kunststoff oder einem anderen geeigneten Flachmaterial bestehen können, horizontal liegend aufgeschichtet sind. Am unteren Ende jedes Magazins 4 ist eine nicht näher dargestellte Vereinzelungseinrichtung vorgesehen, die so betätigbar ist, daß die Zwischenlagen 5 einzeln unter der Wirkung der Schwerkraft auf die darunterliegende Aufgabeposition 16 des Förderorgans 1 fallen können. Die Magazine 4 sind oben offen, um sie mit Zwischenlagen nachladen zu können. Ein wesentliches Merkmal der Erfindung besteht darin, daß zwischen dem am nächsten an den Transportarmen 3 liegenden Magazin 4 oder der entsprechenden Aufgabeposition 16 und der in Förderrichtung am nächsten liegenden Abhebeposition 7 ein Abstand a besteht, der ein ganzzahliges Vielfaches der Schrittlänge s des Förderorgans 1 ist (a = s · x, wobei x eine ganze Zahl ist). Obwohl die Vorrichtung auch unter Verwendung nur eines einzigen Magazins erfindungsgemäß betrieben werden könnte, ist es zweckmäßiger, mehrere Magazine vorzusehen, um den Nachladevorgang wirtschaftlicher gestalten zu können. Bei der in Fig. 1 dargestellten Vorrichtung werden vier Magazine verwendet. Es können aber auch mehr oder weniger sein. In Fig. 2 ist eine Anordnung mit fünf Magazinen 4 gezeigt. Wenn mehrere Magazine 4 verwendet werden, haben erfindungsgemäß die Magazine 4 oder die darunterliegenden Aufgabepositionen des Förderorgans 1 den gleichen Abstand voneinander, der einer Schrittlänge s des Förderorgans 1 entspricht. Die Verwendung mehrerer Magazine, die im Abstand einer Schrittlänge s voneinander angeordnet sind, hat den Vorteil, daß die Magazine sukzessive geleert werden können, ohne daß die Magazine in Förderrichtung V verschoben werden müssen oder die Schrittlänge s verändert werden muß.

Wie bereits erläutert, wird das Förderorgan 1 schrittweise in Förderrichtung V bewegt. Ein wesentliches Merkmal der Erfindung besteht nun darin, daß die Schrittlänge s des Förderorgans 1 sich nach der Formel $s = \frac{b}{n-1}$ errechnet, wobei b der Abstand zwischen zwei benachbarten Abhebepositionen 7 und n die Anzahl der Abhebepositionen 7 ist.

Im Betrieb der Vorrichtung wird zwischen zwei aufeinanderfolgenden Schritten, wenn sich das Förderorgan 1 also nicht bewegt, eine Zwischenlage 5 aus dem jeweiligen Magazin 4 an der entsprechenden Aufgabeposition 16 auf das Förderorgan 1 gegeben. Die auf das Förderorgan 1 gelangenden Zwischenlagen 5 werden in Förderrichtung V schrittweise von dem Förderorgan 1 zu den Abhebepositionen 7 transportiert. Zu Beginn des Verfahrens sind (n-1)² + x Schritte erforderlich bis sämtliche Abhebepositionen 7 mit einer Zwischenlage 5 besetzt sind. Ist dieser Zeitpunkt erreicht, werden die an den Abhebepositionen 7 angeordneten Zwischenlagen 5 durch den Betrieb der Hebevorrichtungen 10 auf die Ablageflächen 6 der Transportarme 3 transportiert. Die oberste Darstellung in Fig. 1 zeigt die Vorrichtung in diesem Zeitpunkt. Nach dem Zurückfahren der Mitnehmereinrichtungen 12 in ihre Stellungen unter dem Förderorgan 1 wird das Förderorgan um n Schritte, also um einer der Zahl der Abhebepositionen 7 entsprechenden Anzahl von Schritten, weiterbewegt. Während dieser Bewegung führen die Transportarme 3 ihren Transportarmzyklus aus, in welchem die auf ihnen liegenden Zwischenlagen zusammen mit einer ersten Lage von länglichen Werkstücken in ein Behältnis gelegt werden. Die von oben zweite Darstellung in Fig. 1 zeigt die Vorrichtung in einem Zeitpunkt, in dem zum zweiten Mal an den Abhebepositionen 7 angeordnete Zwischenlagen 5 durch die Hebevorrichtungen 10 auf die Transportarme für eine zweite Lage von länglichen Werkstücken gelegt werden. Das Förderorgan wird danach wieder um n Schritte bewegt, so daß wieder ein Satz Zwischenlagen an den Abhebepositionen, 7 zur Verfügung steht, um auf die Transportarme 3 transportiert zu werden, von denen sie zusammen mit einer dritten Lage von länglichen Werkstücken in das Behältnis transportiert werden. Für weitere Lagen länglicher Werkstücke wird der beschriebene Transportvorgang entsprechend oft wiederholt. Durch die in Fig. 1 schrägen, gestrichelten Pfeile wird angegeben, in welche Positionen die Zwischenlagen nach Durchführung von jeweils n Schritten gelangen, die beim Abtransport der an den Abhebepositionen 7 angeordneten Zwischenlagen auf dem Förderorgan 1 jeweils liegengeblieben sind.

Aus Fig. 1 ist auch ersichtlich, daß sich nach Durchführung von jeweils n Schritten an jeder Abhebeposition 7 eine Zwischenlage 5 befindet und daß ab der dritten Lage sämtliche auf das Förderorgan 1 aus dem Magazin 4 gelangenden Zwischenlagen 5 von den Hebevorrichtungen 10 abtransportiert werden. Vor der Zufuhr der Zwischenlagen 5 zu den Transportarmen 3 für die dritte Lage von länglichen Werkstücken können zwangsläufig nicht alle dem Förderorgan 1 an der Aufgabeposition 16 zugeführten Zwischenlagen 5 an den Abhebepositionen 7 von den Hebevorrichtungen 10 abtransportiert werden. Die nach der in Förderrichtung V letzten Abhebeposition 7 auf dem Förderorgan 1 vorhandenen Zwischenlagen werden entweder gesammelt oder, wie im dargestellten Beispiel, mittels einer Rückfördereinrichtung zur Aufgabeposition zurückgefördert.

Die im dargestellten Beispiel verwendete Rückfördereinrichtung weist ein umlaufendes, endloses Stützorgan 17 in Form einer Kette oder eines Bandes auf, das parallel in unmittelbarer Nähe zu dem Förderorgan 1 an den beiden abfallenden Seiten und auf der Unterseite des Förderorgans 1 gleichlaufend mit diesem geführt wird. Das Stützorgan 17 der Rückfördereinrichtung wird im Bereich jeder Umlenkrolle 2 des Förderorgans 1 über zwei Umlenkrollen 18 geführt. Die überzähligen Zwischenlagen 5 werden von dem Stützorgan 17 der Rückfördereinrichtung im Bereich der in Fig. 1 linken Umlenkrolle 2 erfaßt und an dem Förderorgan 1 so lange gehalten, bis sie im Bereich der in Fig. 1 rechten Umlenkrolle 2 wieder freigegeben werden. Die Zufuhr von Zwischenlagen aus den Magazinen 4 entfällt, wenn zurückgeförderte Zwischenlagen an die jeweilige Aufgabeposition 16 gelangen. Für einen reibungslosen Ablauf des erfindungsgemäßen Verfahrens ist wichtig, daß an der Aufgabeposition 16, die am nächsten zu den, Transportarmen 3 ist, zu Beginn jedes Schrittes eine Zwischenlage 5 für den Weitertransport bereitliegt, wobei es unerheblich ist, ob diese Zwischenlage aus dem darüber liegenden Magazin oder einem der vorgeschalteten Magazine zugeführt worden ist oder eine zurückgeförderte Zwischenlage ist.

Einen Überschuß an Zwischenlagen gibt es nicht nur zu Beginn des Verfahrens, sondern auch dann, wenn z. B. bei kurzen Werkstücken nicht alle an den Abhebepositionen 7 bereitliegenden Zwischenlagen gebraucht werden. In diesem Fall werden nur einige der Hebevorrichtungen 10 betätigt, um Zwischenlagen auf die entsprechenden Transportarme 3 zu legen. Ein Herunterfallen überzähliger Zwischenlagen an der in Fig. 1 linken Umlenkrolle 2 kann auch durch eine andere Rückfördereinrichtung, wie z. B. durch an dem Förderorgan 1 angeordnete Greifer, verhindert werden, die nicht gezeigt sind. Diese Greifer sind so betätigbar, daß sie die Enden der Zwischenlagen 5 im Bereich der in Fig. 1 linken Umlenkrolle 2 erfassen und erst wieder im Bereich der anderen Umlenkrolle 2 freigeben. Die überzähligen Zwischenlagen können auch gesammelt und wieder in die Magazine eingegeben werden, so daß auf eine Rückfördereinrichtung verzichtet werden kann.

Wie in Fig. 2 dargestellt, kann die Einzelzuführung der Zwischenlagen aus den Magazinen auf einfache Art und Weise dadurch bewerkstelligt werden, daß als Förderorgan 1 eine Förderkette verwendet wird, die aus Gliedern 19 zusammengesetzt ist, wobei jedes Glied eine Tasche 20 aufweist, die im Querschnitt dem Zwischenlagenquerschnitt entspricht. Die Förderkette wird mit wenig Spiel unter den Magazinen 4 vorbeibewegt, wobei durch die Schwerkraft sämtliche Taschen 20 mit Zwischenlagen 5 gefüllt werden. Hierbei werden die einzelnen Zwischenlagenmagazine 4 der Reihe nach geleert und zwar im dargestellten Beispiel von rechts nach links. Werden Zwischenlagen 5 zurückgefördert, so werden sie einfach unter den Magazinen 4 hindurchbewegt, da die betreffende Tasche 20 schon gefüllt ist. Zur Verminderung von Reibung und Verschleiß kann jedoch jedes Magazin eine nicht dargestellte Vorrichtung haben, welche jeweils nur ein Magazin für die Speisung der Förderkette freigibt. Das nächste Magazin wird freigegeben, sobald das zuvor in Betrieb befindliche Magazin leer ist.

Neben dem geringen mechanischen Aufwand für die Speisung der Förderkette mit Zwischenlagen hat die Vorrichtung in der Ausführung gemäß Fig. 2 auch den Vorteil, daß keine aufwendige Steuerung für die Zwischenlagenbeschickung notwendig ist und keine Logik für die Einspeisung von zurückgeförderten Zwischenlagen bei Kurzlängen der Werkstücke oder zu Beginn des Verfahrens benötigt wird. Ohne zusätzlichen Aufwand wird auch erreicht, daß alle Magazine 4 vollständig geleert werden, auch wenn nicht alle Hebevorrichtungen 10 betätigt werden.

Bei Verwendung von mehreren Magazinen 4 über dem Förderorgan 1 kann das eine, sobald es leer ist, durch ein volles ersetzt werden oder gefüllt werden, wobei ein anderes in der Zwischenzeit die Zufuhr von Zwischenlagen übernimmt, ohne daß der Betrieb der Vorrichtung unterbrochen werden muß. Es muß lediglich beim Magazinwechsel das in Förderrichtung hinten angeordnete Magazin die Speisung beginnen, sobald sich die Zwischenlagen in dem kurz vor der Leerung stehenden Magazin auf die Anzahl der dazwischen liegenden Magazine reduziert hat, um sicherzustellen, daß an der zu den Transportarmen 3 am nächsten liegenden Aufgabeposition immer eine Zwischenlage 5 bereitliegt.

Die Zufuhr von Zwischenlagen kann auch aus Gründen der Zeiteinsparung aus mehreren Magazinen gleichzeitig, also lagenweise, erfolgen, wobei nach jeder zugeführten Lage das Förderorgan um eine entsprechende Anzahl von Schritten weiterbewegt wird.

Eine typische Transportvorrichtung hat z. B. sieben Transportarme mit einem gegenseitigen Abstand von 1000 mm. Die Schrittlänge beträgt in diesem Falle 166,7 mm. Bei einer Zwischenlagenbreite von z. B. 60 mm ist somit innerhalb einer Palettenbreite von 800 mm Platz für fünf Magazine.

Durch die schrittweise Bewegung des Förderorgans können die Zwischenlagen positionsgenau auf das Förderorgan aufgebracht und zu den Hebevorrichtungen transportiert werden, denn das Förderorgan bewegt sich nicht, wenn die Zwischenlagen dem Förderorgan zugeführt und von ihm wieder abgehoben werden. Andererseits werden durch die erfindungsgemäße Bemessung der Schrittlänge die Beschleunigungen beim Transport der Zwischenlagen von ihren Aufgabepositionen zu ihren Abhebepositionen auf einem Minimum gehalten und dennoch wird gewährleistet, daß in der relativ kurzen Zeit, die für den Zwischenlagentransport zur Verfügung steht, die Zwischenlagen an ihre Abhebepositionen gelangen. Bei einer typischen Vorrichtung stehen für den Zwischenlagentransport beispielsweise ca. 10 Sekunden für 9 Zwischenlagen zur Verfügung, welche über eine Länge von 8 m verteilt sind. Die erfindungsgemäße Vorrichtung bedarf keiner aufwendigen Steuerung und ist betriebssicher. Die seitliche Anordnung der Magazine neben den Transportarmen ermöglicht einen freien Zugang zu den Magazinen, so daß sie nachgeladen werden können, ohne daß die Transportvorrichtung abgestellt werden muß.

Die Vorrichtung und das Verfahren können zum Fördern von Gegenständen, z. B. Zwischenlagen, auch in umgekehrter Richtung, also von den Transportarmen 3 oder den nun als Bereitstellungsorte dienenden Abhebepositionen 7, zu den Magazinen 4 verwendet werden. Diese Arbeitsweise wäre erforderlich, wenn z. B. längliche Werkstücke mit der Transportvorrichtung entstapelt werden. Dabei könnten die Magazinbehälter über der Kette angeordnet werden, wobei eine Ladevorrichtung die Zwischenlagen von der Kette abhebt und in die Magazine stößt, wo sie von einem Klemmmechanismus am Herunterfallen gehindert werden, oder aber könnten die Behälter unter dem unteren Kettenabschnitt angeordnet werden, wobei die Zwischenlagen in die Behälter fallen, indem die Greifer in diesem Bereich geöffnet werden.

**Patentansprüche**

1. Vorrichtung zum Fördern von Gegenständen (5) von einem Magazin (4) zu mehreren Ablageflächen (6), mit einem Förderorgan (1) zum Transportieren der Gegenstände (5) von dem Magazin (4) zu einer der Zahl der Ablageflächen (6) entsprechenden Anzahl von Abhebepositionen (7) auf dem Förderorgan (1), die im Abstand voneinander unter den Ablageflächen (6) angeordnet sind, und mit einer der Zahl der Abhebepositionen (7) entsprechenden Anzahl von Hebevorrichtungen (10) zum Transportieren der Gegenstände (5) von den Abhebepositionen (7) zu den Ablageflächen (6), dadurch gekennzeichnet, daß das Förderorgan (1) ein umlaufendes endloses Förderorgan ist, das schrittweise mit einer Schrittlänge $s = \frac{b}{n-1}$ bewegbar ist, wobei b der Abstand zwischen je zwei benachbarten Abhebepositionen (7) und n die Anzahl der Abhebepositionen (7) ist, und daß das Magazin (4) von der in Förderrichtung V am nächsten liegenden Abhebeposition (7) einen Abstand a = s · x hat, wobei x eine ganze Zahl ist.

2. Vorrichtung nach Anspruch 1, dadurch gekennzeichnet, daß jede Hebevorrichtung (10) einen mit Druckmittel beaufschlagbaren Kolben (9) aufweist, der in einem Zylinder (8) hin- und herbewegbar ist, jeder Kolben (9) über eine Kolbenstange (11) mit einer Mitnehmereinrichtung (12) für die Gegenstände (5) derart verbunden ist, daß sie zusammen bewegbar sind, die Zylinder (8) mit den in ihnen angeordneten Kolben (9) unterhalb der Abhebepositionen (7) angeordnet sind und die Mitnehmereinrichtungen (12) zwischen einer unterhalb der Abhebepositionen (7) liegenden Stellung und einer oberhalb der Ablageflächen (6) liegenden Stellung auf einem an den Ablageflächen (6) vorbeiführenden Weg hin- und herbewegbar sind.

3. Vorrichtung nach Anspruch 2, dadurch gekennzeichnet, daß jede Hebevorrichtung (10) um einen am unteren Ende des jeweiligen Zylinders (8) angeordneten Drehpunkt gegenüber einer durch die einander zugeordneten Ablagefläche (6), Abhebeposition (7) und Zylinder (8) gehenden vertikalen Linie um einen Winkel α kippbar ist, der so bemessen ist, daß die jeweilige Mitnehmereinrichtung (12) an der Ablagefläche (6) vorbeibewegbar ist.

4. Vorrichtung nach Anspruch 3, dadurch gekennzeichnet, daß die Hebevorrichtungen (10) im Abstand zu den Drehpunkten durch eine im wesentlichen waagerechte Stange (13) miteinander verbunden sind, die mit einem mit Druckmittel beaufschlagbaren Kolben (14), der in einem Zylinder (15) hin- und herbewegbar ist, verbunden ist, und die Stange durch entsprechende Steuerung der Druckmittelzufuhr zu dem Zylinder (15) hin- und herbewegbar ist, um die Hebevorrichtungen (10) zur Seite hin zu kippen.

5. Vorrichtung nach einem der Ansprüche 2 bis 4, dadurch gekennzeichnet, daß das Förderorgan (1) eine Förderkette mit offenen Gliedern (19) aufweist, und die Mitnehmereinrichtungen (12) durch die Öffnungen der Glieder (19) der Förderkette hindurch hochfahrbar und absenkbar sind.

6. Vorrichtung nach Anspruch 5, dadurch gekennzeichnet, daß die Förderkette eine Teilung besitzt, die gleich der Schrittlänge s ist, und pro Glied (19) eine Tasche (20) zur Aufnahme von jeweils einem Gegenstand (5) hat.

7. Vorrichtung nach einem der vorhergehenden Ansprüche, dadurch gekennzeichnet, daß eine Einrichtung zum Zurückfördern von nicht von den Abhebepositionen (7) abtransportierten Gegenständen (5) vorgesehen ist.

8. Vorrichtung nach Anspruch 7, dadurch gekennzeichnet, daß die Rückfördereinrichtung ein umlaufendes, endloses Stützorgan (17) aufweist, das parallel in unmittelbarer Nähe zu dem Förderorgan (1) an seinen seitlichen Umlenkungsstellen und auf seiner Unterseite gleichlaufend mit ihm geführt ist.

9. Vorrichtung nach Anspruch 7, dadurch gekennzeichnet, daß die Rückfördereinrichtung an dem Förderorgan (1) angeordnete Greifervorrichtungen aufweist, die betätigbar sind, um die Gegenstände (5) auf ihrem Rücktransport an dem Förderorgan (1) festzuhalten.

10. Vorrichtung nach einem der vorhergehenden Ansprüche, dadurch gekennzeichnet, daß mehrere Magazine (4) in Förderrichtung V nebeneinander angeordnet sind, die jeweils einen der Schrittlänge s entsprechenden Abstand voneinander haben.

11. Verwendung der Vorrichtung nach einem der vorhergehenden Ansprüche zum Zuführen von Zwischenlagen (5) auf die Transportarme (3) einer Transporteinrichtung für längliche Werkstücke.

12. Verfahren zum Fördern von Gegenständen (5) auf einem Förderorgan (1) von einer Aufgabeposition (16) zu mehreren, in Förderrichtung V aufeinanderfolgenden Abhebepositionen (7), die im Abstand voneinander angeordnet sind, dadurch gekennzeichnet, daß als Förderorgan (1) ein umlaufendes, endloses Förderorgan verwendet wird, das mit den darauf angeordneten Gegenständen (5) schrittweise bewegt wird, daß zwischen zwei aufeinanderfolgenden Schritten jeweils ein Gegenstand (5) an der Aufgabeposition (16) auf dem Förderorgan (1) angeordnet wird, daß zwischen zwei Folgen von n Schritten wenigstens ein Gegenstand (5) von einer Abhebeposition (7) entfernt wird, daß die Schrittlänge s nach der Formel $s = \frac{b}{n-1}$ errechnet wird, wobei b der Abstand zwischen je zwei benachbarten Abhebepositionen (7) und n die Anzahl der Schritte ist, die gleich der Anzahl der Abhebeposition (7) ist, und daß die Aufgabeposition (16) von der in Förderrichtung V am nächsten liegenden Abhebeposition (7) um einen Abstand $a = s \cdot x$ entfernt ist, wobei x eine ganze Zahl ist.

13. Verfahren nach Anspruch 12, dadurch gekennzeichnet, daß zuerst $(n-1)^2 + x$ Schritte durchgeführt werden, dann wenigstens ein Gegenstand (5) von seiner Abhebeposition (7) entfernt wird danach eine Folge von jeweils n Schritten durchgeführt werden, und zwischen jeder Folge von n Schritten wenigstens ein Gegenstand (5) von seiner Abhebeposition (7) entfernt wird.

14. Verfahren nach Anspruch 12 oder 13, dadurch gekennzeichnet, daß die nicht von ihren Abhebepositionen (7) entfernten Gegenstände (5) auf dem Förderorgan (1) in Umlaufrichtung schrittweise zur Aufgabeposition (16) zurückgefördert werden.

15. Verfahren nach einem der Ansprüche 12 bis 14, wobei mehrere Aufgabepositionen (16) im Abstand einer schrittlänge s auf dem Förderorgan (1) vorgesehen sind, dadurch gekennzeichnet, daß die Aufgabepositionen (16) sukzessive mit mehreren Gegenständen (5) beschickt werden, wobei zwischen zwei aufeinanderfolgenden Schritten jeweils ein Gegenstand an der jeweiligen Aufgabeposition (16) auf dem Förderorgan (1) angeordnet wird.

16. Verfahren nach einem der Ansprüche 12 bis 14, wobei mehrere Aufgabepositionen (16) im Abstand einer Schrittlänge s auf dem Förderorgan (1) vorgesehen sind, dadurch gekennzeichnet, daß zwei oder mehr als zwei Aufgabepositionen (16) gleichzeitig mit Gegenständen beschickt werden und das Förderorgan (1) um eine der beschickten Aufgabepositionen (16) entsprechenden Anzahl von Schritten weiterbewegt wird.

17. Verfahren nach einem der Ansprüche 12 bis 16 zum Zuführen von Zwischenlagen (5) zu den Transportarmen (3) einer Transportvorrichtung für längliche Werkstücke.

18. Verwendung der Vorrichtung nach einem der Ansprüche 1 bis 10 zum Fördern von Gegenständen (5) in umgekehrter Richtung von den Ablageflächen (6) zu einem oder mehreren Magazinen (4).

## Claims

1. Apparatus for conveying articles (5) from a magazine (4) to a plurality of deposit surfaces (6), comprising a conveying member (1) for transporting the articles (5) from the magazine (4) to a number corresponding to the number of the deposit surfaces (6), of lift-off positions (7) on the conveying member (1) which are arranged spaced apart from each other beneath the deposit surfaces (6), and a number of lifting means (10) corresponding to the number of lift-off positions (7) for transporting the articles (5) from the lift-off positions (7) to the deposit surfaces (6), characterized in that the conveying member (1) is a circulating endless conveying member which is movable stepwise with a step length $s = \frac{b}{n-1}$, wherein b is the distance between every two adjacent lift-off positions (7) and n the number of the lift-off positions (7), and that the magazine (4) has from the nearest lift-off position (7) in the conveying direction V a distance $a = s \cdot x$, x being an integer.

2. Apparatus according to claim 1, characterized in that each lifting means (10) comprises a fluid-actuatable piston (9) which is reciprocatable in a cylinder (8), each piston (9) being connected via a piston rod (11) to an entraining means (12) for the articles (5) in such a manner that they are movable together, the cylinders (8) are arranged with the pistons (9) disposed in them beneath the lift-off positions (7) and the entraining means (12) are reciprocatable between a position lying beneath the lift-off positions (7) and a position lying above the deposit surfaces (6) on a path leading past the deposit surfaces (6).

3. Apparatus according to claim 2, characterized in that each lifting means (10) is tiltable through an angle α about a pivot point disposed at the lower end of the respective cylinder (8) with respect to a vertical line passing through the associated deposit surface (6), lift-off position (7) and cylinder (8), said angle α being so dimensioned that the respective entraining or driver means (12) can be moved past the deposit surface (6).

4. Apparatus according to claim 3, characterized in that the lifting means are connected together spaced from the pivot points by a substantially horizontal rod (13) which is connected to a fluid-actuable piston (14) which is reciprocatable in a cylinder (15), and the rod is reciprocatable by a corresponding control of the fluid supply to the cylinder (15) to tilt the lifting means (10) to the side.

5. Apparatus according to any one of claims 2 to 4, characterized in that the conveying member (1) comprises a conveying chain with open links (19) and the entraining or driver means (12) are adapted to be raised and lowered through the openings of the members (19) of the conveying chain.

6. Apparatus according to claim 5, characterized in that the conveying chain has a pitch which is equal to the step length s and per link (19) has a pocket (20) for receiving in each case one article (5).

7. Apparatus according to any one of the preceding claims, characterized in that a means is provided for conveying back articles (5) not carried away from the lift-off positions (7).

8. Apparatus according to claim 7, characterized in that the return conveying means comprises a circulating endless support member (17) which is guided parallel in the immediate vicinity to the conveying member (1) at its lateral reversal points and running synchronously therewith at its lower side.

9. Apparatus according to claim 7, characterized in that the return conveying means comprises gripper means which are disposed on the conveying member (1) and which are actuable to hold the articles (5) on their return transport on the conveying member (1).

10. Apparatus according to any one of the preceding claims, characterized in that a plurality of magazines (4) are arranged adjacent each other in the conveying direction V and each have a spacing from each other corresponding to the step length s.

11. Use of the apparatus according to any one of the preceding claims for supplying intermediate layers (5) to the transport arms (3) of a transport means for elongated workpieces.

12. Method of conveying articles (5) on a conveying member (1) from a charging position (16) to a plurality of lift-off positions (7) which follow each other in the conveying direction V and which are spaced apart from each other, characterized in that as conveying member (1) a circulating endless conveying member is used which is moved stepwise with the articles (5) disposed thereon, that between every two consecutive steps an article (5) is disposed at the charging position (16) on the conveying member, that between two sequences of n steps at least one article (5) is removed from a lift-off position (7), that the step length s is calculated by the formula $s = \frac{b}{n-1}$, b being the distance between every two adjacent lift-off positions (7) and n the number of steps which is equal to the number of lift-off positions (7), and that the charging position (16) is disposed from the lift-off position (7) nearest in the conveying direction V a distance $a = s \cdot x$, x being an integer.

13. Method according to claim 12, characterized in that firstly $(n-1)^2 + x$ steps are carried out, then at least one article (5) is removed from its lift-off position (7), that thereafter a sequence of in each case n steps is carried out and between every sequence of n steps at least one article (5) is removed from its lift-off position (7).

14. Method according to claim 12 or 13, characterized in that the articles (5) not removed from their lift-off positions (7) are conveyed back on the conveying member (1) in the circulating direction stepwise to the charging position (16).

15. Method according to any one of claims 12 to 14, wherein a plurality of charging positions (16) at intervals of a step length s is disposed on the conveying member (1), characterized in that the charging positions (16) are successively loaded with a plurality of articles (5), between every two consecutive steps one article being disposed at the respective charging position (16) on the conveying member (1).

16. Method according to any one of claims 12 to 14, wherein a plurality of charging positions (16) at intervals of a step length s is provided in the conveying member (1), characterized in that two or more than two charging positions (16) are simultaneously loaded with articles and the conveying member (1) is advanced a number of steps corresponding to the loaded charging positions (16).

17. Method according to any one of claims 12 to 16 for supplying intermediate layers (5) to the transport arms (3) of a transport means for elongated workpieces.

18. Use of the apparatus according to any one of claims 1 to 10 for conveying articles (5) in the reverse direction from the deposit surfaces (6) to one or more magazines (4).

**Revendications**

1. Dispositif pour transporter des objets (5) depuis un magasin (4) jusqu'à plusieurs surfaces de réception (6), au moyen d'un organe de transport (1) pour le transport des objets (5) depuis le magasin (4) jusqu'à un nombre de positions d'enlèvement (7) sur l'organe de transport (1) correspondant au nombre des surfaces de réception (6), ces positions d'enlèvement (7) étant disposées à distance les unes des autres sous les surfaces de réception (6), et par un nombre de dispositifs élévateurs (10) correspondant au nombre des positions d'enlèvement (7) pour le transport des objets (5) depuis les positions d'enlèvement (7) jusqu'aux surfaces de réception (6), caractérisé en ce que l'organe de tranport (1) est un organe sans fin qui peut se déplacer pas à pas avec un pas $s = \frac{b}{n-1}$, où b est la distance entre deux positions d'enlèvement (7) voisines et n est le nombre des positions d'enlèvement (7), et le magasin (4) est éloigné de la position d'enlèvement (7) qui est la plus proche dans la direction du transport V, d'une distance $a = s \cdot x$, où x est un nombre entier.

2. Dispositif suivant la revendication 1 caractérisé en ce que chaque dispositif élévateur (10) présente un piston (9) susceptible d'être soumis à l'action d'un fluide sous pression, et qui peut se déplacer dana les deux sens dans un cylindre (8), en ce que chaque piston (9) est relié par une tige de piston (11) à un dispositif d'entraînement (12) des objets (5) de telle manière que ces derniers peuvent être déplacés ensemble, en ce que les cylindres (8), avec les pistons (9) disposés à l'intérieur de ceux-ci, sont disposés au-dessous des positions d'enlèvement (7), et en ce que les dispositifs d'entraînement (12) sont susceptibles de se déplacer dans les deux sens entre une position située au-dessous des positions d'enlèvement (7) et une position située au-dessus des surfaces de réception (6) sur une trajectoire passant devant les surfaces de réception (6).

3. Dispositif suivant la revendication 2 caractérisé en ce que chaque dispositif élévateur (10) est susceptible de basculer d'un angle α autour d'un centre de rotation disposé à l'extrémité inférieure du cylindre (8) correspondant par rapport à une ligne verticale passant par la surface de réception (6), la position d'enlèvement (7) et le cylindre (8) qui sont associés l'un à l'autre, l'angle étant calculé de telle façon que les dispositif d'entraînement (12) correspondants sont susceptibles de se déplacer le long des surfaces de réception (6).

4. Dispositif suivant la revendication 3 caractérisé en ce que les dispositifs élévateurs (10) sont reliés l'un à l'autre à distance des centres de rotation par une tige (13) essentiellement horizontale, qui est reliée à un piston (14) susceptible d'être alimenté par un fluide sous pression, et qui est susceptible de se déplacer dans les deux sens dans un cylindre (15), et en ce que la tige est susceptible de se déplacer dans les deux sens sous l'effet d'une commande correspondante de l'alimentation du fluide sous pression vers le cylindre (15), pour faire basculer vers le côté les dispositifs élévateurs (10).

5. Dispositif suivant l'une quelconque des revendications 2 à 4 caractérisé en ce que l'organe de transport (1) comprend une chaine de transport à maillons (19) ouverts, et en ce que les dispositif d'entraînement (12) sont susceptibles de se déplacer vers le haut et vers le bas à travers les ouvertures des maillons (19) de la chaîne de transport.

6. Dispositif suivant la revendication 5 caractérisé en ce que la chaîne de transport comporte une division qui est identique au pas s et comporte pour chaque maillon (19) une poche (20) destinée à recevoir chaque fois un objet (5).

7. Dispositif suivant l'une quelconque des revendications précédentes caractérisé en ce qu'il est prévu une installation pour le transport en retour des objets (5) qui n'ont pas été extraits des positions d'enlèvement (7).

8. Dispositif suivant la revendication 7 caractérisé en ce que l'installation de transport en retour comprend un organe de soutien (17) circulant sans fin qui est disposé parallèlement à l'organe de transport (1) à proximité immédiate et entre les positions latérales de renversement de celui-ci le long du dessous de celui-ci.

9. Dispositif suivant la revendication 7 caractérisé en ce que l'installation de transport en retour comprend des dispositifs à pince associés à l'organe de transport (1), qui sont susceptibles d'être actionnés pour retenir fermement les objets (5) sur l'organe de transport (1) pendant leur transport en retour.

10. Dispositif suivant l'une quelconque des revendications précédentes caractérisé en ce que plusieurs magasins (4) sont disposés l'un à côté de l'autre dans la direction du transport V, et sont respectivement à une distance l'un de l'autre correspondant au pas s.

11. Application du dispositif suivant l'une quelconque des revendications précédentes, pour l'alimentation depuis des positions intermédiaires (5) des bras de transport (3) d'une installation de transport pour pièces à usiner allongées.

12. Procédé pour le transport d'objets (5) sur un organe de transport (1) depuis une position d'alimentation (16) jusqu'à plusieurs positions d'enlèvement (7) consécutives dans la direction du transport V et qui sont disposées à distance les unes des autres, caractérisé en ce qu'on utilise, en tant qu'organe de transport (1), un organe de transport sans fin qui se déplace pas à pas avec les objets (5) disposés dessus, en ce que entre deux pas consécutifs un objet (5) est disposé sur l'organe de transport (1) à la position d'alimentation (16), en ce que, entre deux séries de n pas, au moins un objet (5) est enlevé de sa position d'enlèvement (7), en ce que le pas s est calculé d'après la formule $s = \frac{b}{n-1}$ dans laquelle b est la distance entre deux positions d'enlèvement (7) consécutives et n est le nombre des pas que est identique au nombre des positions d'enlèvement (7), et en ce que la position d'alimentation (16) est éloignée de la position d'enlèvement (7) la plus proche dans la direction du transport V d'une distance $a = s \cdot x$ où est un nombre entier.

13. Procédé suivant la revendication 12 caractérisé en ce que l'on effectue d'abord $(n-1)^2 + x$ pas, puis on éloigne au moins un objet (5) de sa position d'enlèvement (7), ensuite on effectue des séries de n pas et entre chaque série de n pas on éloigne au moins un objet (5) de sa position d'enlèvement (7).

14. Procédé suivant l'une quelconque des revendications 12 ou 13 caractérisé en ce que les objets (5) qui n'ont pas été éloignés de leur position d'enlèvement (7) sont transportés en retour à la position d'alimentation (16) sur l'organe de transport (1) pas à pas dans la direction de circulation.

15. Procédé suivant l'une des revendications 12 à 14, dans lequel plusieurs positions d'alimentation (16) sont prévues sur l'organe de transport (1) à la distance d'un pas s, caractérisé en ce que les positions d'alimentation (16) sont chargées successivement de plusieurs objets (5), un objet étant disposé chaque fois entre deux pas consécutifs sur l'organe de transport (1) à la position d'alimentation (16) correspondante.

16. Procédé suivant l'une des revendications 12 à 14, dans lequel plusieurs positions d'alimentation (16) sont prévues sur l'organe de transport (1) à la distance d'un pas s, caractérisé en ce que deux ou plus de deux positions d'alimentation (16) sont chargées en même temps d'objets, et en ce que l'organe de transport (1) est ensuite déplacé d'un nombre de pas correspondant aux positions d'alimentation (16) chargées.

17. Procédé sulvant l'une quelconque des revendications 12 à 16 pour l'alimentation à partir de positions intermédiaires (5) des bras de transport (3) d'un dispositif de transport pour pièces à usiner allongées.

18. Application du dispositif suivant l'une quelconque des revendications 1 à 10 au transport d'objets (5) dans la direction inverse depuis les surfaces de reception (6) jusqu'à un ou plusieurs magasins (4).

FIG. 1

FIG. 3

FIG. 2